# EUROPÄISCHE PATENTANMELDUNG

(11) **EP 1 722 251 A2**
(43) Veröffentlichungstag der Anmeldung: **15.11.2006**
(21) Anmeldenummer: 06113251.0
(22) Anmeldetag: 28.04.2006
(51) Int. Cl.: G01V 3/15

(54) **Handgeführten, scannender Untergrunddetektor**

(30) Priorität: 10.05.2005 DE 102005000053
(71) Anmelder: HILTI Aktiengesellschaft, 9494 Schaan (LI)
(72) Erfinder: Schmitzer, Harald, 9470, Werdenberg (CH); Würsch, Christoph, 9470, Werdenberg (CH)
(74) Vertreter: Wildi, Roland

(57) **Zusammenfassung**

Ein handgeführter scannender Untergrunddetektor (1) mit einem Detektormodul (2) und einem Rechenmittel (3) innerhalb eines handhabbaren Gehäuses (5) mit einem zur definiert beabstandeten Führung des Detektormoduls (2) über eine zu untersuchende Wandfläche (6) ausgebildetes Führungsmittel (7), das zumindest einen Wegsensor (8) aufweist, der mit dem Rechenmittel (3) verbunden ist, wobei der Wegsensor (8) über ein Steuermittel (9) steuernd mit dem Detektormodul (2) verbunden ist. Zudem ist ein entsprechendes Steuerverfahren beschrieben.

## Beschreibung

Die Erfindung bezeichnet einen handgeführten, scannenden Untergrunddetektor, insbesondere zur Detektion von in Beton oder Mauerwerk eingebetteten Armierungen oder Leitungen, sowie ein zugeordnetes Steuerverfahren.

Im Baugewerbe spielt die Detektion eingebetteter Objekte eine wesentliche Rolle, sei es zur Detektion von Armierungseisen, Metallrohren, elektrischen Leitungen oder Kunststoffrohren. Auf die der Untergrunddetektion als solche zugrunde liegenden Detektionsmessverfahren, die nicht Gegenstand dieser Anmeldung sind, soll hier nicht weiter eingegangen werden. Allgemein werden eingebettete Objekte bspw. nach der US6541965 über die Änderung der Impedanz eines eingeprägten, magnetischen Nahfeldes, nach der W002063343 über die Änderung der Impedanz eines eingeprägten, elektrischen Nahfeldes oder nach der US5541605 elektromagnetisch über Radar detektiert und charakterisiert.

Bei längs einer Scannrichtung scannenden Untergrunddetektoren kommt es auf eine zuverlässige Erfassung der Wegänderung auf der im Baugewerbe üblicherweise grobrauhen Wandfläche an, worunter im Sinne der Erfindung zumindest stückweise ebene Oberflächen sowohl von Wänden als auch von Decken, Böden etc. zu verstehen sind.

Die US5296807 zeigt einen derartigen Untergrunddetektor für eingebettete eindimensionale Objekte mit einem handhabbaren, über eine Fläche scannend verfahrbaren Messkopf mit einem Detektormodul für ein eingeprägtes magnetisches Nahfeld, mit einem Wegsensor sowie mit einer örtlich separaten bildausgebenden Auswerteeinheit, die mit dem Messkopf signalübertragend verbunden ist. Dabei sind die vier voneinander beabstandeten Führungsräder des Untergrunddetektors je paarweise über starre Achsen und diese über einen Zahnriemen drehfest miteinander verbunden, wodurch stets eine geradlinige Führung des Messkopfes erzwungen wird. Der ebenfalls über den Zahnriemen angetriebene und als Inkrementalgeber ausgebildete Wegsensor ist sensitiv zur Bewegung der Führungsräder. Die von dem Wegsensor erfassten Ortsdaten und die von dem Detektormodul kontinuierlich detektierten Detektionsdaten werden in einer separaten Auswerteeinheit mit einem Rechenmittel miteinander verrechnet und das Ergebnis auf einem graphischem Ausgabedisplay angezeigt.

Nach der DE10207477 wird ein derartiger Untergrunddetektor mit einem Detektormodul und einem Rechenmittel innerhalb eines handhabbaren Gehäuses und mit graphischem Ausgabedisplay eindimensional scannend über die zu untersuchende Wandfläche hin- und herbewegt, wobei längs einer Scannrichtung die relative Wegänderung mit einem Wegsensor erfasst und vom Rechenmittel des Untergrunddetektors verarbeitet wird. Dabei sind die vier voneinander beabstandeten Führungsräder des Untergrunddetektors je paarweise über starre Achsen drehfest miteinander verbunden. Ein zu Fehlmessungen führendes Abheben von Führungsrädern wird von dem Wegsensor erfasst und löst eine Fehlermeldung aus, die dem Nutzer signalisiert wird. Dennoch sind Detektionsmessungen mit teilweise oder vollständig vom Untergrund abgehobenen Führungsrädern möglich.

Die Aufgabe der Erfindung besteht in der Realisierung eines handgeführten, scannenden Untergrunddetektors, der bei teilweise oder vollständig vom Untergrund abgehobenen Führungsmitteln eine Detektionsmessung zuverlässig unterbindet, sowie eines zugeordneten Steuerverfahrens.

Die Aufgabe wird im Wesentlichen durch die Merkmale der unabhängigen Ansprüche gelöst. Vorteilhafte Weiterbildungen ergeben sich aus den Unteransprüchen.

So weist ein handgeführter scannender Untergrunddetektor mit einem Detektormodul und einem Rechenmittel innerhalb eines handhabbaren Gehäuses ein zur definiert beabstandeten Führung des Detektormoduls über eine zu untersuchende Wandfläche ausgebildetes Führungsmittel auf, das zumindest einen Wegsensor aufweist, der mit dem Rechenmittel verbunden ist, wobei der Wegsensor über ein Steuermittel steuernd mit dem Detektormodul verbunden ist.

Im zugeordneten Steuerverfahren eines handgeführten scannenden Untergrunddetektors wird wiederholt in einem Scannschritt der vom Wegsensor gemessene Weg des Führungsmittels erfasst, um mittels Ortsdaten die Position des Detektormoduls an der zu untersuchenden Wandfläche bestimmen zu können, und in einem Detektionsschritt von dem Detektormodul eine Detektionsmessung ausgeführt, um mittels Detektionsdaten im Untergrund eingebettete Objekte detektieren zu können, bevor vom Rechenmittel die Detektionsdaten und die Ortsdaten zu Ergebnisdaten verrechnet werden, wobei über ein Steuermittel der Detektionsschritt abhängig von einer Wegänderung des Führungsmittels zur Wandfläche gesteuert wird.

Durch das Steuermittel zum Steuern des Detektormoduls in Abhängigkeit von einer Wegänderung des Führungsmittels relativ zur Wandfläche ist bei teilweise oder vollständig vom Untergrund abgehobenem Führungsmittel eine Aktivierung des Detektormoduls unterbindbar bzw. die Sensorleitung verminderbar, wodurch Fehlmessungen auch ohne aktive Handlung des Nutzers zuverlässig vermieden werden.

Vorteilhaft ist das Steuermittel zusammen mit dem Rechenmittel in einem gemeinsamen Integrierten Schaltkreis ausgebildet, wodurch die Anzahl der benötigten Bauelemente vermindert wird, wobei es im Sinne der Anmeldung dahinstehen kann, ob das Steuermittel hardwaremässig oder softwaremässig realisiert ist.

Alternativ vorteilhaft ist das Steuermittel zusammen mit dem Detektormodul in einem gemeinsamen Integrierten Schaltkreis ausgebildet, wodurch die Anzahl der benötigten Bauelemente vermindert wird, wobei es im Sinne der Anmeldung dahinstehen kann, ob das Steuermittel hardwaremässig oder softwaremässig realisiert ist.

Vorteilhaft ist das Steuermittel ein Triggermittel, welches auf ein vom Wegsensor erfasstes Bewegungsereignis hin das Detektormodul für eine kurze Einzelmesszeitspanne (einige ms) aktiviert bzw. die Sensorleistung erhöht, wodurch bei fehlendem Bewegungsereignis das Detektormodul kurzfristig keine weiteren Detektionsmessungen durchführt.

Vorteilhaft ist das Führungsmittel als ein Gleitrahmen ausgebildet, der zumindest drei flächig beabstandete Gleitpunkte aufweist, bspw. ausgebildet als Noppen, Borsten oder Kufen, wodurch das Führungsmittel kippfrei direkt an der zu untersuchenden Wandfläche entlang führbar ist.

Alternativ vorteilhaft ist das Führungsmittel als ein Fahrwerk ausgebildet, das zumindest ein an der zu untersuchenden Wandfläche entlang abrollbares Abrollmittel aufweist, bspw. ausgebildet als Kugel, Rad, Walze oder Kette, wodurch vom Nutzer zum Führen des Führungsmittels an der zu untersuchenden Wandfläche weniger Kraft aufgewendet werden muss.

Vorteilhaft weist das Fahrwerk zwei voneinander beabstandete, zueinander parallel orientierte Führungsräder oder alternativ zumindest eine Führungskette oder Führungswalze auf, wodurch ein rutschfreies Abrollen ausschliesslich längs einer geradlinigen Führungsrichtung möglich ist, die bei einem eindimensionalen Scann erforderlich ist.

Vorteilhaft sind zumindest zwei, weiter vorteilhaft alle, Abrollmittel drehstarr miteinander gekoppelt, wodurch der Zwang zum Abrollen ausschliesslich längs der geradlinigen Führungsrichtung verstärkt wird.

Vorteilhaft ist der Wegsensor als 2d-Wegsensor ausgebildet, bspw. mechanischer Mouse-Sensor, optische CCD-Kamera, wodurch längs einer beliebigen Scannkurve eine Erfassung des Weges möglich ist.

Vorteilhaft ist der Wegsensor als optischer Sensor ausgebildet, bspw. als CCD-Kamera, der sensitiv bezüglich Oberflächenmerkmalen der zu untersuchenden Wandfläche ist, wodurch eine berührungslose Erfassung des Weges möglich ist.

Alternativ vorteilhaft ist der Wegsensor sensitiv zu zumindest einem Abrollmittel ausgebildet, bspw. als Inkrementalgeber (optisch, magnetisch), Winkelgeber (optisch, magnetisch), Drehgeschwindigkeitssensor (Speckle, Induktion), wodurch eine Erfassung des Weges unabhängig von den Oberflächenmerkmalen der zu untersuchenden Wandfläche ist.

Vorteilhaft sind zumindest zwei Wegsensoren vorhanden, die jeweils sensitiv zu verschiedenen, zugeordneten Abrollmitteln sind, welche voneinander unabhängig bewegbar sind, wodurch eine zufällige Bewegung eines Abrollmittels, bspw. durch Berührung mit der Hand des Nutzers, von einer Scannbewegung entlang der zu untersuchenden Wandfläche unterscheidbar ist.

Im Steuerverfahren wird vorteilhaft der Detektionsschritt über das Steuermittel abhängig von mit zumindest zwei unabhängigen Wegsensoren erfassten Wegänderung gesteuert, bspw. indem die erfassten skalaren Einzelwegänderungen miteinander multipliziert bzw. die logischen Einzeltriggerereignisse miteinander AND-verknüpft werden, wodurch im Ergebnis der Detektionsschritt zuverlässig nur bei einer Scannbewegung entlang der zu untersuchenden Wandfläche erfolgt.

Die Erfindung wird bezüglich vorteilhafter Ausführungsbeispiele näher erläutert mit:
- Fig. 1: als Untergrunddetektor (Seitenansicht schematisch)
- Fig. 2: als alternativer Untergrunddetektor (Seitenansicht schematisch)
- Fig. 3: als alternatives Fahrwerk (Aufsicht schematisch)
- Fig. 4: als weiteres alternatives Fahrwerk (Aufsicht schematisch)
- Fig. 5: als Flussschema eines zeitgetriggerten Steuerverfahrens

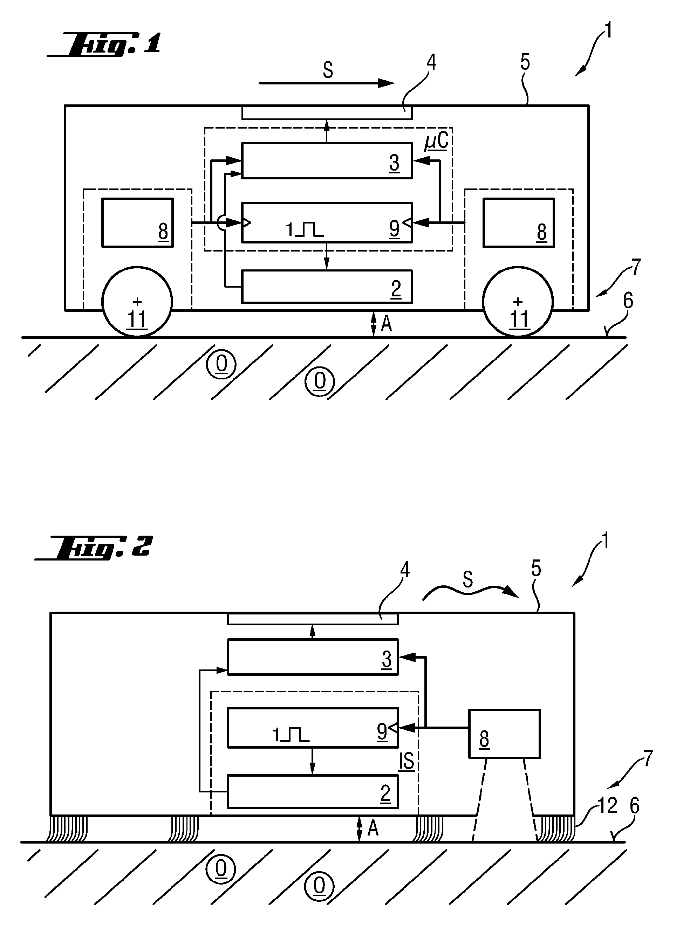

Nach Fig. 1 weist ein längs einer geradlinigen Scanrichtung S handgeführter scannender Untergrunddetektor 1 mit einem Detektormodul 2, einem Rechenmittel 3 und einem graphischen Ausgabedisplay 4 innerhalb eines handhabbaren Gehäuses 5 ein zur Führung des Detektormoduls 2 im Abstand A über eine zu untersuchende Wandfläche 6 mit eingebetteten Objekten O ausgebildetes Führungsmittel 7 in Form eines Fahrwerks auf. Das Führungsmittel 7 weist zwei eindimensionale Wegsensoren 8 auf, die mit dem Rechenmittel 3 sowie über ein Steuermittel 9 steuernd mit dem Detektormodul 2 verbunden sind. Dabei ist das mit dem Rechenmittel 3 in einem gemeinsamen Mikrocontroller [mü]C ausgebildete Steuermittel 9 als ein, von den als Inkrementalweggeber ausgebildeten Wegsensoren 8 jeweils einzeln flankengesteuerter, intern AND-verknüpfter Trigger in Form eines softwareimplementierten monostabilen Kippgliedes mit einer Zeitkonstanten von 10 ms ausgebildet. Der Ausgang des Steuermittels 9 ist mit dem Detektormodul 2 steuernd verbunden und löst beim derart getriggerten Bewegungsereignis eine einzelne Detektionsmessung aus. Jedem der Wegsensoren 8 ist sensibel je ein Führungsrad 11 zugeordnet, die voneinander beabstandet angeordnet, parallel zueinander orientiert sowie unabhängig voneinander drehbar im Führungsmittel 7 gelagert sind.

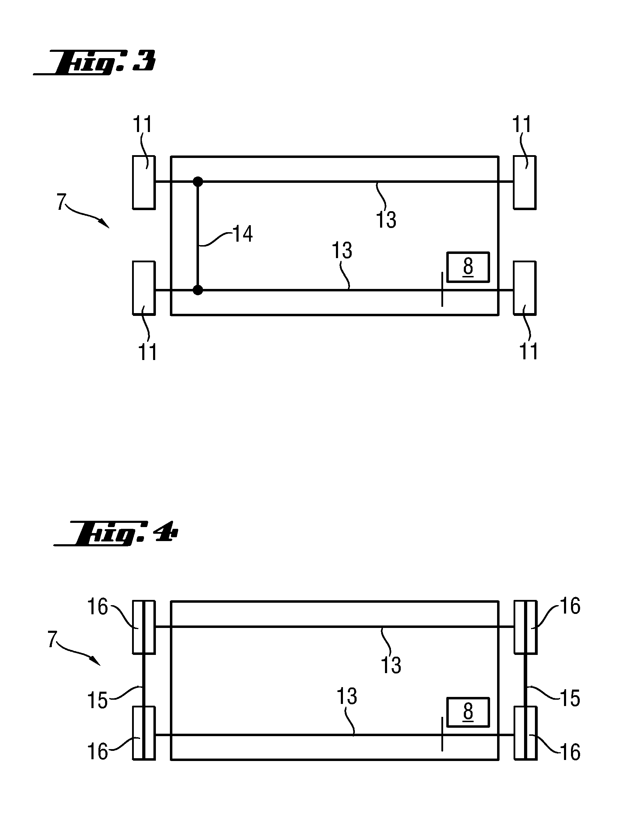

Nach Fig. 2 weist ein entlang einer beliebig krummlinigen Scannrichtung S handgeführter scannender Untergrunddetektor 1 mit einem Detektormodul 2, einem Rechenmittel 3 und einem graphischen Ausgabedisplay 4 innerhalb eines handhabbaren Gehäuses 5 ein zur Führung des Detektormoduls 2 im Abstand A über eine zu untersuchende Wandfläche 6 mit eingebetteten Objekten O ausgebildetes Führungsmittel 7 auf. Das Führungsmittel 7 in Form eines Gleitrahmens mit Gleitborsten 12 weist einen optischen 2d-Wegsensor 8 in Form einer durch eine Öffnung im Gehäuse sensibel auf die Wandfläche 6 gerichteten CCD-Kamera auf, der mit dem Rechenmittel 3 sowie über ein Steuermittel 9 steuernd mit dem Detektormodul 2 verbunden ist. Dabei ist das mit dem Detektormodul 2 in einem gemeinsamen Integrierten Schaltkreis IS ausgebildete Steuermittel 9 als ein Trigger in Form eines hardwareimplementierten monostabilen Multivibrators mit einer Zeitkonstanten von 10 ms ausgebildet, dessen Eingang direkt mit dem Wegsensor 8 und dessen Ausgang mit dem Detektormodul 2 steuernd verbunden ist und beim derart getriggerten Bewegungsereignis eine einzelne Detektionsmessung auslöst.

Nach Fig. 3 weist das alternative als Fahrwerk ausgebildete Führungsmittel 7 vier voneinander beabstandete, zueinander parallel orientierte Führungsräder 11 auf, welche alle über starre Achsen 13 und diese über einen Zahnriemen 14 drehstarr miteinander gekoppelt sind. Der als magnetischer Inkrementalgeber ausgebildete Wegsensor 8 an einer Achse 13 ist über diese drehstarr den Führungsrädern 11 sensitiv zugeordnet.

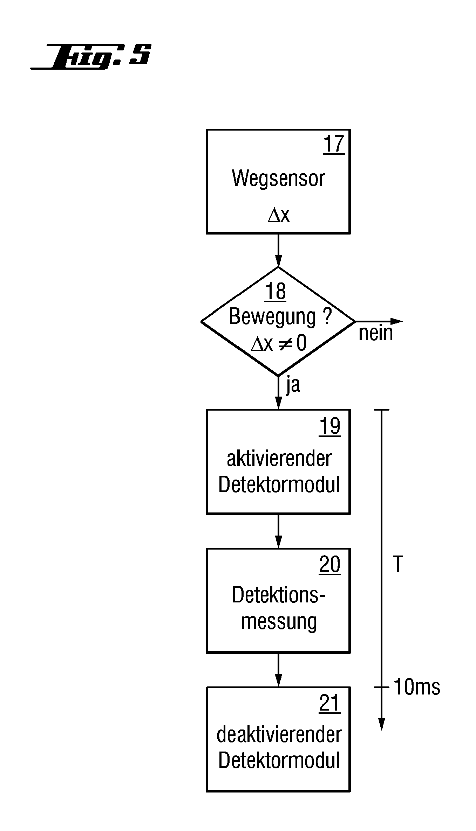

Nach Fig. 4 weist das alternative als Fahrwerk ausgebildete Führungsmittel 7 zwei voneinander beabstandete, zueinander parallel orientierte Führungsketten 15 auf, deren gegenüberliegende Kettenräder 16 paarweise über starren Achsen 13 drehstarr miteinander gekoppelt sind. Der als magnetischer Inkrementalgeber ausgebildete Wegsensor 8 an einer Achse 13 ist über diese drehstarr den Führungsketten 15 sensitiv zugeordnet.

Nach Fig. 5 wird im zugeordneten zeitgetriggerten Steuerverfahren mittels zeitlich aufeinander folgender Einzelschritte 17 bis 21 des als Trigger ausgebildeten Steuermittels in einem Scanschritt 17 jede vom inkrementellen Wegsensor gemessene Wegänderung [Delta]x des Führungsmittels erfasst, die unter der Bedingung 18 einer Bewegung ein logisches Eingangssignal des flankengesteuerten Triggers darstellt. Das mit diesem Eingangssignal synchronisierte logische Ausgangssignal einer Zeitspanne T von 10 ms aktiviert 19 für diese Zeitspanne T im Detektionsschritt 20 das Detektormodul und ermöglicht eine einzelne Detektionsmessung. Nach Ablauf der Zeitspanne T ist das Detektormodul somit wieder deaktiviert 21. Dies wiederholt sich bei der nächsten erfassten inkrementellen Wegänderung [Delta]x.

## Patentansprüche

1. Handgeführter scannender Untergrunddetektor mit einem Detektormodul (2) und einem Rechenmittel (3) innerhalb eines handhabbaren Gehäuses (5) mit einem zur definiert beabstandeten Führung des Detektormoduls (2) über eine zu untersuchende Wandfläche (6) ausgebildeten Führungsmittel (7), das zumindest einen Wegsensor (8) aufweist, der mit dem Rechenmittel (3) verbunden ist, **dadurch gekennzeichnet, dass** der Wegsensor (8) über ein Steuermittel (9) steuernd mit dem Detektormodul (2) verbunden ist.

2. Untergrunddetektor nach Anspruch 1, **dadurch gekennzeichnet, dass** das Steuermittel (9) zusammen mit dem Rechenmittel (3) in einem gemeinsamen Mikrocontroller ([mü]C) ausgebildet ist.

3. Untergrunddetektor nach Anspruch 1, **dadurch gekennzeichnet, dass** das Steuermittel (9) zusammen mit dem Detektormodul (2) in einem gemeinsamen Integrierten Schaltkreis (IS) ausgebildet ist.

4. Untergrunddetektor nach einem der Ansprüche 1 bis 3, **dadurch gekennzeichnet, dass** das Steuermittel (9) ein Triggermittel ist.

5. Untergrunddetektor nach einem der Ansprüche 1 bis 4, **dadurch gekennzeichnet, dass** das Führungsmittel (7) als ein Gleitrahmen ausgebildet ist, der zumindest drei flächig beabstandete Gleitpunkte aufweist.

6. Untergrunddetektor nach einem der Ansprüche 1 bis 4, **dadurch gekennzeichnet, dass** das Führungsmittel (7) als ein Fahrwerk ausgebildet ist, das zumindest ein an der zu untersuchenden Wandfläche (6) entlang abrollbares Abrollmittel aufweist.

7. Untergrunddetektor nach Anspruch 6, **dadurch gekennzeichnet, dass** das Fahrwerk zwei voneinander beabstandete, zueinander parallel orientierte Führungsräder (11) oder alternativ zumindest eine Führungskette (15) oder eine Führungswalze aufweist.

8. Untergrunddetektor nach Anspruch 6 oder 7, **dadurch gekennzeichnet, dass** zumindest zwei, optional alle, Abrollmittel drehstarr miteinander gekoppelt sind.

9. Untergrunddetektor nach einem der Ansprüche 1 bis 8, **dadurch gekennzeichnet, dass** der Wegsensor (8) als 2d-Wegsensor ausgebildet ist.

10. Untergrunddetektor nach einem der Ansprüche 1 bis 9, **dadurch gekennzeichnet, dass** der Wegsensor (8) als optischer Sensor ausgebildet ist, der sensitiv bezüglich Oberflächenmerkmalen der zu untersuchenden Wandfläche (6) ist.

11. Untergrunddetektor nach einem der Ansprüche 1 bis 9, **dadurch gekennzeichnet, dass** der Wegsensor (8) sensitiv zu zumindest einem Abrollmittel ausgebildet ist.

12. Untergrunddetektor nach einem der Ansprüche 6 bis 11, **dadurch gekennzeichnet, dass** zumindest zwei Wegsensoren (8) vorhanden sind, die jeweils sensitiv zu verschiedenen, zugeordneten Abrollmitteln sind, welche voneinander unabhängig bewegbar sind.

13. Steuerverfahren eines handgeführten scannenden Untergrunddetektors (1), welcher wiederholt in einem Scanschritt (17) einen vom Wegsensor (8) gemessene Weg eines Führungsmittels (7) erfasst, um mittels Ortsdaten die Position eines Detektormoduls (2) an einer zu untersuchenden Wandfläche (6) bestimmen zu können, und in einem Detektionsschritt (20) mit dem Detektormodul (2) eine Detektionsmessung ausführt, um mittels Detektionsdaten im Untergrund eingebettete Objekte (O) detektieren zu können, bevor vom Rechenmittel (3) die Detektionsdaten und die Ortsdaten zu Ergebnisdaten verrechnet werden, **dadurch gekennzeichnet, dass** über ein Steuermittel (9) der Detektionsschritt (20) abhängig von einer Wegänderung ([Delta]x) des Führungsmittels (7) zur Wandfläche (6) gesteuert wird.

14. Steuerverfahren nach Anspruch 13, **dadurch gekennzeichnet, dass** der Detektionsschritt (20) über das Steuermittel (9) abhängig von mit zumindest zwei unabhängigen Wegsensoren (8) erfassten Wegänderung ([Delta]x) gesteuert wird.
